# EUROPÄISCHE PATENTSCHRIFT

(11) **EP 2 193 407 B1**
(45) Veröffentlichungstag und Bekanntmachung des Hinweises auf die Patenterteilung: **17.10.2012**
(21) Anmeldenummer: 08803312.1
(22) Anmeldetag: 28.08.2008
(51) Int. Cl.: G05B 19/042, G05B 23/02, H04L 9/32

(54) **VERFAHREN ZUR HERSTELLUNG EINER SICHEREN VERBINDUNG VON EINEM SERVICE-TECHNIKER ZU EINER VON EINEM STÖRFALL BETROFFENEN KOMPONENTE EINER FERNDIAGNOSTIZIERBAREN UND/ODER FERNWARTBAREN AUTOMATISIERUNGS-UMGEBUNG**
METHOD FOR ESTABLISHING A SECURE CONNECTION FROM A SERVICE TECHNICIAN TO A COMPONENT OF AN AUTOMATION ENVIRONMENT THAT CAN BE REMOTELY DIAGNOSED AND/OR MAINTAINED AND IS EXPERIENCING FAILURE
PROCÉDÉ VISANT À ÉTABLIR UNE LIAISON SÛRE ENTRE UN TECHNICIEN ET UN COMPOSANT DÉFECTUEUX D'UN ENVIRONNEMENT D'AUTOMATISATION APTE AU TÉLÉDIAGNOSTIC ET/OU À LA TÉLÉMAINTENANCE

(30) Priorität: 26.09.2007 DE 102007046079
(43) Veröffentlichungstag der Anmeldung: 09.06.2010
(73) Patentinhaber: Siemens Aktiengesellschaft, 80333 München (DE)
(72) Erfinder: FRIES, Steffen, 85598 Baldham (DE); KÖPF, Andreas, 81739 München (DE)
(86) Internationale Anmeldenummer: PCT/EP2008/061286
(87) Internationale Veröffentlichungsnummer: WO 2009/043646

(56) Entgegenhaltungen:
- EP-A- 1 582 950
- DE-A1- 10 144 971
- DE-A1- 10 200 681
- US-A1- 2006 095 231

## Beschreibung

Speziell in Automatisierungs-Umgebungen werden oft Installationen von mehreren, verschiedenen Auftraggebern bzw. Firmen durchgeführt bzw. stammen oft die einzelnen Komponenten von verschiedenen Firmen. Beispielsweise liefert eine erste Firma Automatisierungs-Endgeräte, eine zweite Firma Netzwerk-Komponenten und eine dritte Firma Büro-Komponenten und Geräte.

Um beispielsweise Service-Technikern den Zugang zu Automatisierungs-Endgeräten zu ermöglichen, wird in der Regel ein Zugangs-Credential, beispielsweise ein Service-Zertifikat mit korrespondierendem privaten Schlüssel oder eine Kennung mit dazugehörigem Passwort oder ähnliches, verwendet. Ein derartiger Zugangsmechanismus muss jedoch vorab auf einem Rechner, beispielsweise einem Laptop, des Service-Technikers installiert bzw. konfiguriert werden. Um lange Ausfallzeiten, welche speziell im Automatisierungsumfeld kostspielig und damit kritisch sind zu vermeiden, muss es möglich sein, solche Zugriffe so schnell wie möglich einzurichten.

Problematisch wird es, wenn wie eingangs beschrieben, mehrere Firmen kooperieren und in einem unter dem Begriff Störfall zusammengefassten Fehler- bzw. Service-Fall verschiedene Entitäten involviert sind. So kann es beispielsweise vorkommen, dass ein Service-Techniker auf Automatisierungs-Endgeräte via einem auch als Remote-Zugang bezeichneten Fernzugriff zugreifen möchte, sich hierfür aber erst beispielsweise über einen Virtuellen Privaten Netzwerk (VPN) Tunnel mit dem Netzwerk verbinden muss. Falls der Service-Techniker noch kein Service-Zertifikat erhalten hat, was bei einem größeren Pool an Service-Technikern, welche oft für mehrere Firmen zuständig sind, durchaus vorkommt, ist auch ein Service-Techniker derjenigen Firma notwendig, von der die Netzwerk-Komponenten stammen.

Daher ist es problematisch, ein derart erstelltes Service-Zertifikat an den Service-Techniker zu übertragen. Oft sind die Service-Techniker der einzelnen Firmen räumlich voneinander getrennt, da die meisten Aufgaben per Fernzugriff gelöst werden können. Eine Klartext-Übertragung des Service-Zertifikats über das Internet ist aus Sicherheitsgründen nicht ratsam. Für eine Übertragung mittels einer verschlüsselten Email wird bereits eine gemeinsame Public-Key Infrastruktur (PKI) benötigt, was wiederum oftmals zu aufwändig ist.

Um diese Probleme teilweise zu umgehen, müssen bislang die Service-Techniker entweder alle Service-Zertifikate von allen zu betreuenden Firmen auf ihren Rechnern installiert haben, oder es muss ein Service-Zertifikat "just in time" erstellt und beispielsweise mittels eines Datenträgers, beispielsweise eines Universal Serial Bus (USB) Sticks, an den entsprechenden Service-Techniker übergeben werden, wie z.B. in der US 2006/095231 A1 offenbart.

Als eine Aufgabe der Erfindung kann es demnach angesehen werden, ein Verfahren zu entwickeln, welches eine schnelle und einfache Herstellung einer sicheren Verbindung von einem Service Techniker zu einer von einem Störfall betroffenen Komponente einer ferndiagnostizierbaren und/oder fernwartbaren Automatisierungs-Umgebung ermöglicht.

Die Aufgabe wird gelöst mit den Merkmalen des Anspruchs 1.

Demnach sieht ein erfindungsgemäßes Verfahren zur Herstellung einer sicheren Verbindung von einem Service Techniker zu einer von einem Störfall betroffenen Komponente einer ferndiagnostizierbaren und/oder fernwartbaren Automatisierungs-Umgebung, bei der zur Herstellung der sicheren Verbindung ein Service-Zertifikat benötigt wird, vor, dass zunächst mittels eines Einmal-Passworts eine sichere Initial-Verbindung vom Service-Techniker zu der Automatisierungs-Umgebung aufgebaut wird, über welche Initial-Verbindung anschließend ein zur Herstellung der sicheren Verbindung mit der von dem Störfall betroffenen Komponente der Automatisierungs-Umgebung benötigtes Service-Zertifikat von der Automatisierungs-Umgebung zum Service-Techniker übertragen wird, und dann letztlich mittels des Service-Zertifikats die sichere Verbindung von dem Service Techniker zu der von dem Störfall betroffenen Komponente hergestellt wird.

Vorteile der Erfindung gegenüber dem Stand der Technik ergeben sich insbesondere dadurch, dass durch eine Verwendung eines Einmal-Passworts, beispielsweise in Form eines Initial-Credentials, das beispielsweise aus einer Zufallszahl bestehen kann, einem Service-Techniker in einem Störfall sehr schnell und sicher ein Fernzugriffs-Zugang ermöglicht werden kann.

Die Erfindung ist darüber hinaus einfach in bestehende Automatisierungs-Umgebungen zu integrieren, da hierfür lediglich Netzwerk-Komponenten um eine zusätzliche Logik in Form beispielsweise eines Zufallszahlengenerators erweitert werden müssen, oder nur eine zusätzliche Authentisierungs-Komponente im Netzwerk installiert zu werden braucht.

Eine vorteilhafte Ausgestaltung der Erfindung sieht vor, dass ein für eine von einem Störfall betroffene Komponente zuständiger Service-Techniker bei Auftreten eines Störfalls über einen ersten Kommunikationsweg und/oder mittels einer ersten Nachricht ein Störfall-Ticket erhält, welches zumindest einen Hinweis auf die betroffene Komponente der Automatisierungs-Umgebung enthält, und das Einmal-Passwort über einen zweiten Kommunikationsweg und/oder mittels einer zweiten, von der ersten Nachricht unabhängigen Nachricht zugestellt bzw. übertragen wird. Durch die Aufteilung der Kommunikationswege, beispielsweise indem die IP-Adresse in einem Störfall-Ticket mitgeteilt wird und das Einmal-Passwort bzw. Initial-Credential per SMS übermittelt wird, ist es für einen potentiellen Angreifer schwieriger die betreffenden Daten für einen Zugriff zu erhalten.

Eine andere vorteilhafte Ausgestaltung der Erfindung sieht vor, dass die sichere Initial-Verbindung mindestens eine serverseitig authentifizierte Verbindung ist, über die sich der Service-Techniker mittels des Einmal-Passworts authentifiziert.

Eine zusätzliche vorteilhafte Ausgestaltung der Erfindung sieht vor, dass eine Übertragung des Einmal-Passworts an den Service-Techniker der von dem Störfall betroffenen Komponente per Short Message Service (SMS) erfolgt. Eine Versendung per SMS ist schnell, gezielt an den zuständigen Service-Techniker zu richten.

Eine weitere vorteilhafte Ausgestaltung der Erfindung sieht vor, dass das Einmal-Passwort von einem das Störfall-Ticket ausstellenden System bzw. Einrichtung automatisch erstellt und von einem SMS-Server an den für die von dem Störfall betroffene Komponente zuständigen Service Techniker übertragen wird.

Eine besonders vorteilhafte Ausgestaltung der Erfindung sieht vor, dass zur Erstellung des Einmal-Passworts eine Benutzeroberfläche verwendet wird, welche es erlaubt "per Klick" ein Initial-Credential zu erstellen und anschließend per SMS zu versenden.

Eine andere, besonders vorteilhafte Ausgestaltung der Erfindung sieht vor, dass sich ein für eine von einem Störfall betroffene Komponente zuständiger Service-Techniker, um auf eine von einem Störfall betroffene Komponente, beispielsweise ein Automatisierungs-Endgerät, der Automatisierungs-Umgebung zuzugreifen, mit der Initial-Verbindung mit einer Netzwerk-Komponente der Automatisierungs-Umgebung verbindet, über welche Netzwerk-Komponente er dann die sichere Verbindung zur vom Störfall betroffenen Komponente erhält.

Eine zusätzliche, besonders vorteilhafte Ausgestaltung der Erfindung sieht vor, dass zumindest der Aufbau der Initial-Verbindung mittels des Einmal-Passworts beispielsweise in Form eines Initial-Credentials von einem für die Netzwerk-Komponente zuständigen Service-Techniker überwacht wird. Dabei ist denkbar, die Überwachung "remote" durch Fernüberwachung erfolgt.

Eine weitere, besonders vorteilhafte Ausgestaltung der Erfindung sieht vor, dass aus Sicherheitsgründen eine Erstellung des Einmal-Passworts von dem für die Netzwerk-Komponente zuständigen Service Techniker angestoßen wird und anschließend der für die Netzwerk-Komponente zuständige Service Techniker eine Übertragung des Einmal-Passworts an den für die von dem Störfall betroffene Komponente, wie etwa einem Automatisierungs-Endgerät, zuständigen Service Techniker veranlasst.

Vorzugsweise ist das Einmal-Passwort ein Initial-Credential.

Das Initial-Credential kann vorzugsweise in Form einer Zufallszahl vorliegen oder anhand einer Zufallszahl erstellt werden.

Vorzugsweise besteht das Initial-Credential nur aus einer Zufallszahl ohne Korrelation zu weiteren, die Automatisierungs-Umgebung und/oder die von dem Störfall betroffene Komponente betreffende Daten, wie etwa zu einer Internet-Protokoll (IP) Adresse, einem Rechner-Namen oder einem Account. Diese Daten bzw. einen Teil dieser Daten erhält der für die von dem Störfall betroffene Komponente zuständige Service-Techniker getrennt von dem Initial-Credential vorzugsweise mit einem Störfall-Ticket.

Eine vorteilhafte Ausgestaltung der Erfindung sieht vor, dass die aktuelle Zufallszahl bzw. das aktuelle Initial-Credential für den Zugang des Service-Technikers zu der von dem Störfall betroffenen Komponente in Statusmeldungen an den Service-Techniker der Netzwerk-Komponente mit transportiert wird, um beispielsweise Informationen über die Benutzung einer bereits ausgestellten Zufallszahl bzw. eines bereits ausgestellten Initial-Credentials zu geben.

Eine andere vorteilhafte Ausgestaltung der Erfindung sieht vor, dass die Netzwerk-Komponente über einen Pool von Zufallszahlen verfügt, die für Service-Techniker ausgegeben werden.

Eine besonders vorteilhafte Ausgestaltung der Erfindung sieht vor, dass nach jedem erfolgten Zugriff auf bestimmte Komponenten der Pool selbständig wieder aufgefüllt wird. Damit kann beispielsweise sichergestellt werden, dass eine Erzeugung von Zufallszahlen bzw. von Initial-Credentials durch die Netzwerk-Komponente zu Zeiten durchgeführt wird, in denen die Last der Netzwerk-Komponente gering ist. Alternativ ist denkbar, dass vor Auslauf des Pools ein Administrator einer die Zufallszahlen erzeugenden Komponente informiert wird, um die Generierung eines neuen Pools zu initiieren. Dies wäre vergleichbar mit einer Liste von iTANs, wie sie heute im Bankenumfeld verwendet werden.

Eine zusätzliche vorteilhafte Ausgestaltung der Erfindung sieht vor, dass die Zufallszahl, die für das Initial-Credential für die initiale Verbindung benutzt wurde, als zusätzliche Information in das Service-Zertifikat integriert ist, beispielsweise im Subject Alternative Name, was die spätere Analyse von Log Files bezüglich des Netzzugriffes erleichtern kann, da sich die Zertifikate über die Assoziation mit der Zufallszahl leicht einem Verbindungsaufbauwunsch zuordnen lassen.

Eine weitere vorteilhafte Ausgestaltung der Erfindung sieht vor, dass nach Herstellung der sicheren Initial-Verbindung beispielsweise die Netzwerk-Komponente automatisch ein Service-Zertifikat zur Verfügung stellt, welches die Verbindung beispielsweise zum Automatisierungs-Endgerät ermöglicht.

Eine besonders vorteilhafte Ausgestaltung der Erfindung sieht vor, dass es sich bei dem Service-Zertifikat um ein Kurzzeit-Zertifikat handelt, welches beispielsweise nur eine Stunde oder einen Tag lang gültig ist.

Eine andere besonders vorteilhafte Ausgestaltung der Erfindung sieht vor, dass die Erstellung des Einmal-Passworts und/oder ein Fernzugriff via die mittels Service-Zertifikat hergestellte sichere Verbindung überwacht und/oder protokolliert wird.

Gemäß einer besonders vorteilhaften Ausgestaltung der Erfindung wird das oben beschriebene Verfahren von einer ferndiagnostizierbaren bzw. -wartbaren Automatisierungs-Umgebung durchgeführt, welche hierzu über Mittel zur Durchführung eines solchen Verfahrens verfügt.

Die Mittel umfassen vorzugsweise mindestens eine Netzwerk-Komponente, wie beispielsweise einen Switch, eine VPN-Box, einen WLAN-Switch, oder dergleichen, welche mit einem Zufallszahlen-Generator ausgestattet ist, der zur Erstellung von Einmal-Passwörtern in Form von vorzugsweise Initial-Credentials vorgesehen ist.

Ein Ausführungsbeispiel der Erfindung ist nachfolgend anhand der Zeichnung näher erläutert. Dabei zeigt:

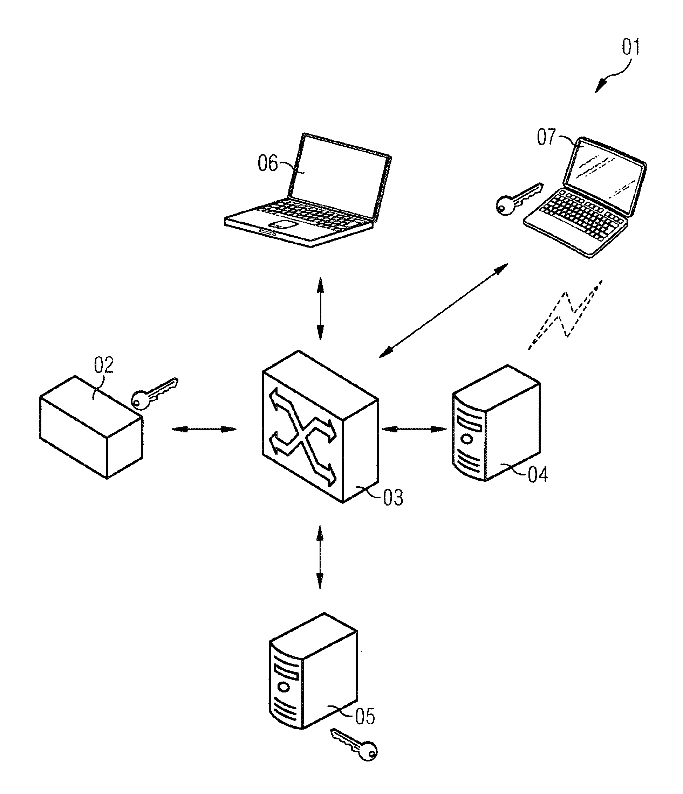

- Fig. 1: eine schematische Darstellung einer durch Fernzugriff ferndiagnostizierbare bzw. -wartbare Automatisierungs-Umgebung.

Eine durch Fernzugriff ferndiagnostizierbare bzw. -wartbare Automatisierungs-Umgebung 01 ist wie folgt aufgebaut: Ein Automatisierungs-Endgerät 02, beispielsweise eine Werkzeugmaschine 02, welches beispielsweise von einer nicht dargestellten Büro-Komponente oder einem Büro-Gerät aus beispielsweise über ein lokales Netzwerk, wie etwa ein Firmennetzwerk, konfigurierbar und/oder steuerbar ist, ist mit einer Netzwerk-Komponente 03 mit Zufallszahlengenerator verbunden. Außerdem sind ein SMS-Server 04 sowie eine Zertifizierungs-Instanz 05 mit der Netzwerk-Komponente 03 mit Zufallszahlengenerator verbunden. Die Netzwerk-Komponente 03 mit Zufallszahlengenerator, der SMS-Server 04 und die Zertifizierungs-Instanz 05 können Bestandteile eines lokalen Netzwerks sein. Bei der Netzwerk-Komponente 03 kann es sich beispielsweise um einen Switch, eine VPN-Box, oder einen WLAN-Switch handeln. Bei Bedarf, wie etwa in einem Störfall, können sich ein oder mehrere für die bei dem Störfall betroffenen Komponenten 02, 03 zuständige Service-Techniker 06, 07 mit der Netzwerk-Komponente 03 fern verbinden. Dabei ist der Service-Techniker 06 für die Netzwerk-Komponente 03 zuständig, und der Service-Techniker 07 für das Automatisierungs-Endgerät 02.

Wichtig ist hervorzuheben, dass die Automatisierungs-Umgebung 01 mehrere verschiedene Automatisierungs-Endgeräte 02 umfassen kann, für die verschiedene Service-Techniker 07 zuständig sein können.

Tritt ein Störfall beim Automatisierungs-Endgerät 02 auf, erhält der für das Automatisierungs-Endgerät 02 zuständige Service-Techniker 07 ein Störfall-Ticket, welches einen Hinweis auf ein Problem beim Automatisierungs-Endgerät 02 enthält. Um auf das Automatisierungs-Endgerät 02 zugreifen zu können, muss sich der Service Techniker 07 mit der Netzwerk-Komponente 03 verbinden, über welche er dann eine Verbindung zum Automatisierungs-Endgerät 02 erhält. Der Service Techniker 07 kann sich jedoch nur über die Netzwerk-Komponente 03 zum Automatisierungs-Endgerät 02 verbinden. Um eine Initial-Verbindung zur Netzwerk-Komponente 03 herzustellen benötigt der Service Techniker 07 ein Initial-Credential in Form vorzugsweise einer Zufallszahl zur Authentifikation. Nach Herstellung der Initial-Verbindung mit der Netzwerk-Komponente 03 wird automatisch ein Service-Zertifikat ausgehandelt, welches erst die Verbindung zum Automatisierungs-Endgerät 02 ermöglicht.

Das Initial-Credential wird entweder:
- von einem das Störfall-Ticket ausstellenden System bzw. Einrichtung automatisch erstellt und via dem SMS-Server 04 an den für das Automatisierungs-Endgerät 02 zuständigen Service Techniker 07 verschickt, wobei die verlässliche Administration der Telefonnummer des Service Technikers vorausgesetzt wird, oder
- vom für die Netzwerk-Komponente 03 zuständigen Service Techniker 06 angestoßen und anschließend von ihm an den für das Automatisierungs-Endgerät 02 zuständigen Service Techniker 07 versendet.

In beiden Fällen wird die Erstellung des Initial-Credentials bzw. der Zugriff via Service-Zertifikat überwacht und protokolliert.

Zusätzlich kann mittels Statusmeldungen die aktuelle Zufallszahl bzw. das aktuelle Initial-Credential für den Zugang des Service-Technikers 07 zum Automatisierungs-Endgerät 02 in Statusmeldungen an den Service-Techniker 06 der Netzwerk-Komponente 03 mit transportiert werden, um beispielsweise Informationen über die Benutzung einer bereits ausgestellten Zufallszahl bzw. eines bereits ausgestellten Initial-Credentials zu geben. Hierbei ist es ebenfalls erforderlich die Kommunikation der Initial-Credentials auf vertrauliche Weise zu realisieren, um möglichen Angriffen vorzubeugen. Ebenfalls denkbar ist, dass die Netzwerk-Komponente 03 einen Pool von Zufallszahlen hat, die für Service-Techniker 06, 07 ausgegeben werden. Nach jedem erfolgten Zugriff auf bestimmte Komponenten 02, 03 kann dann dieser Pool selbständig wieder aufgefüllt werden.

Damit kann beispielsweise sichergestellt werden, dass eine Erzeugung von Zufallszahlen bzw. von Initial-Credentials durch die Netzwerk-Komponente 03 zu Zeiten durchgeführt wird, in denen die Last der Netzwerk-Komponente 03 gering ist.

Vorzugsweise handelt es sich bei dem Service-Zertifikat um ein Kurzzeit-Zertifikat, welches beispielsweise nur einen Tag lang gültig ist. Darüber hinaus kann die Zufallszahl, die für das Initial-Credential für die initiale Verbindung benutzt wurde als zusätzliche Information mit in das Service-Zertifikat integriert werden, beispielsweise im Subject Alternative Name, was die spätere Analyse von Log Files bezüglich des Netzzugriffes erleichtern kann, da sich die Zertifikate über die Assoziation mit der Zufallszahl leicht einem Verbindungsaufbauwunsch zuordnen lassen.

Zusammengefasst werden erfindungsgemäß eine oder mehrere Netzwerk-Komponenten, wie beispielsweise Switch, VPN-Box, WLAN-Switch, und dergleichen, mit einem Zufallszahlen-Generator ausgestattet, welcher damit Einmal-Passwörter in Form von Initial-Credentials erstellt. Diese Initial-Credentials können nur für einen ersten sicheren Verbindungsaufbau, eine so genannte Initial-Verbindung, verwendet werden. Sicher bedeutet hierbei, dass die Initial-Verbindung bzw. der Kanal über den die Initial-Verbindung statt findet, mindestens eine serverseitig authentifizierte Verbindung sein sollte, über die sich der Service-Techniker mittels Einmal-Passwort authentifiziert. Über diese sichere Initial-Verbindung wird anschließend ein Service-Zertifikat zur Herstellung der Verbindung zu der von dem Störfall betroffenen Komponente der Automatisierungs-Umgebung übertragen.

Die Erstellung bzw. Übertragung des Initial-Credentials wird aus Sicherheitsgründen vorzugsweise vom Service-Techniker der Netzwerk-Komponente angestoßen. Die Übertragung des Initial-Credentials an den Service-Techniker beispielsweise der Automatisierungs-Endgeräte erfolgt daraufhin per SMS. Vorzugsweise wird hierzu eine Benutzeroberfläche verwendet, welche es erlaubt "per Klick" ein Initial-Credential zu erstellen und anschließend per SMS zu versenden.

Da eine Übertragung des Initial-Credentials per SMS zwar an sich auch nicht als sicher erachtet werden kann, besteht das Initial-Credential vorzugsweise nur aus einer Zufallszahl ohne Korrelation zu einer Internet-Protokoll (IP) Adresse, einem Rechner-Namen oder einem Account. Diese Daten bzw. einen Teil dieser Daten erhält der Service-Techniker vorzugsweise mit einem Störfall-Bericht bzw. Störfall-Ticket.

Durch die Aufteilung der Kommunikationswege, beispielsweise indem die IP-Adresse in einem Störfall-Ticket mitgeteilt wird und das Initial-Credential per SMS übermittelt wird, ist es für einen potentiellen Angreifer schwieriger die betreffenden Daten für einen Zugriff zu erhalten.

Da nicht hundertprozentig ausgeschlossen werden kann, dass alle benötigten Daten von einem Angreifer abgefangen werden, wird zumindest der Aufbau der Initial-Verbindung mittels des Initial-Credentials vorzugsweise von einem Service-Techniker der Netzwerk-Komponente überwacht. Eine derartige Überwachung kann auch "remote" durch Fernüberwachung erfolgen.

Vorteile der Erfindung gegenüber dem Stand der Technik ergeben sich insbesondere dadurch, dass durch eine Versendung eines Initial-Credentials, beispielsweise einer Zufallszahl, per SMS einem Service-Techniker in einem Störfall sehr schnell und sicher ein Fernzugriffs-Zugang ermöglicht werden kann.

Die Erfindung ist darüber hinaus einfach in bestehende Automatisierungs-Umgebungen zu integrieren, da hierfür lediglich die Netzwerk-Komponenten um eine zusätzliche Logik in Form beispielsweise eines Zufallszahlengenerators erweitert werden müssen, oder eine zusätzliche Authentisierungs-Komponente im Netzwerk installiert werden muss.

Wichtig ist hervorzuheben, dass der Begriff Zufallszahl im Sinne der Erfindung nicht ausschließlich als eine oder mehrere Zahlen, sondern auch als ein oder mehrere Buchstaben oder als Kombination von einer oder mehrerer Zahlen und einem oder mehreren Buchstaben verstanden werden darf. So kann die Zufallszahl beispielsweise ein Bitmuster bzw. eine Bitfolge sein, welches sowohl Buchstaben, als auch Zahlen repräsentiert.

## Patentansprüche

1. Verfahren zur Herstellung einer sicheren Verbindung von einem Service Techniker (06, 07) zu einer von einem Störfall betroffenen Komponente (02, 03) einer ferndiagnostizierbaren und/oder fernwartbaren Automatisierungs-Umgebung, wobei zur Herstellung der sicheren Verbindung ein Service-Zertifikat benötigt wird,**dadurch gekennzeichnet,**
**dass** zunächst mittels eines Einmal-Passworts eine sichere Initial-Verbindung vom Service-Techniker (06, 07) zu der Automatisierungs-Umgebung (01) aufgebaut wird, über welche Initial-Verbindung anschließend ein zur Herstellung der sicheren Verbindung benötigtes Service-Zertifikat von der Automatisierungs-Umgebung (01) zum Service-Techniker (06, 07) übertragen wird, und dann mittels des Service-Zertifikats die sichere Verbindung von dem Service Techniker (06, 07) zu der von dem Störfall betroffenen Komponente (02, 03) hergestellt wird.

2. Verfahren nach Anspruch 1, **dadurch gekennzeichnet,**
**dass** ein für eine von einem Störfall betroffene Komponente (02) zuständiger Service-Techniker (07) bei Auftreten eines Störfalls über einen ersten Kommunikationsweg und/oder mittels einer ersten Nachricht ein Störfall-Ticket erhält, welches zumindest einen Hinweis auf die betroffene Komponente (02) der Automatisierungs-Umgebung (01) enthält, und das Einmal-Passwort über einen zweiten Kommunikationsweg und/oder mittels einer zweiten Nachricht übertragen wird.

3. Verfahren nach Anspruch 1 oder 2, **dadurch gekennzeichnet,**
**dass** die sichere Initial-Verbindung mindestens eine serverseitig authentifizierte Verbindung ist, über die sich der Service-Techniker mittels des Einmal-Passworts authentifiziert.

4. Verfahren nach Anspruch 1, 2 oder 3,
**dadurch gekennzeichnet,**
**dass** eine Übertragung des Einmal-Passworts an den Service-Techniker der von dem Störfall betroffenen Komponente (02) per Short Message Service (SMS) erfolgt.

5. Verfahren nach Anspruch 4, **dadurch gekennzeichnet,**
**dass** das Einmal-Passwort automatisch erstellt und von einem SMS-Server (04) an den für die von dem Störfall betroffene Komponente (02) zuständigen Service Techniker (07) übertragen wird.

6. Verfahren nach einem der vorhergehenden Ansprüche, **dadurch gekennzeichnet,**
**dass** zur Erstellung des Einmal-Passworts eine Benutzeroberfläche verwendet wird, welche es erlaubt "per Klick" ein Initial-Credential zu erstellen und anschließend per SMS zu versenden.

7. Verfahren nach einem der vorhergehenden Ansprüche, **dadurch gekennzeichnet,**
**dass** sich ein Service-Techniker (07), um auf eine von einem Störfall betroffene Komponente (02) der Automatisierungs-Umgebung (01) zuzugreifen, mit der Initial-Verbindung mit einer Netzwerk-Komponente (03) der Automatisierungs-Umgebung (01) verbindet, über welche Netzwerk-Komponente (03) er dann die sichere Verbindung zur vom Störfall betroffenen Komponente (02) erhält.

8. Verfahren nach Anspruch 7, **dadurch gekennzeichnet,**
**dass** zumindest der Aufbau der Initial-Verbindung mittels des Einmal-Passworts von einem für die Netzwerk-Komponente (03) zuständigen Service-Techniker (06) überwacht wird.

9. Verfahren nach Anspruch 8, **dadurch gekennzeichnet,**
**dass** die Überwachung "remote" durch Fernüberwachung erfolgt.

10. Verfahren nach Anspruch 7, 8 oder 9,
**dadurch gekennzeichnet,**
**dass** eine Erstellung des Einmal-Passworts von dem für die Netzwerk-Komponente (03) zuständigen Service Techniker (06) angestoßen wird und anschließend der für die Netzwerk-Komponente (03) zuständige Service Techniker (06) eine Übertragung des Einmal-Passworts an den für die von dem Störfall betroffene Komponente (02) zuständigen Service Techniker (07) veranlasst.

11. Verfahren nach einem der vorhergehenden Ansprüche,
**dadurch gekennzeichnet,**
**dass** das Einmal-Passwort ein Initial-Credential ist.

12. Verfahren nach Anspruch 11,
**dadurch gekennzeichnet,**
**dass** das Initial-Credential in Form einer Zufallszahl vorliegt oder anhand einer Zufallszahl erstellt wird.

13. Verfahren nach Anspruch 12,
**dadurch gekennzeichnet,**
**dass** das Initial-Credential nur aus einer Zufallszahl ohne Korrelation zu weiteren, die Automatisierungs-Umgebung (01) und/oder die von dem Störfall betroffene Komponente (02) betreffende Daten besteht.

14. Verfahren nach Anspruch 13,
**dadurch gekennzeichnet,**
**dass** der Service-Techniker diese Daten bzw. einen Teil dieser Daten mit einem Störfall-Ticket erhält.

15. Verfahren nach einem der Ansprüche 12, 13 oder 14,
**dadurch gekennzeichnet,**
**dass** in Statusmeldungen die aktuelle Zufallszahl für den Zugang des Service-Technikers (07) zu der von dem Störfall betroffenen Komponente (02) an den Service-Techniker (06) der Netzwerk-Komponente (03) mit transportiert wird.

16. Verfahren nach einem der Ansprüche 12 bis 15,
**dadurch gekennzeichnet,**
**dass** die Netzwerk-Komponente (03) über einen Pool von Zufallszahlen verfügt, die für Service-Techniker (06, 07) ausgegeben werden.

17. Verfahren nach Anspruch 16,
**dadurch gekennzeichnet,**
**dass** nach jedem erfolgten Zugriff auf bestimmte Komponenten (02, 03) der Pool selbständig wieder aufgefüllt wird.

18. Verfahren nach Anspruch 16,
**dadurch gekennzeichnet,**
**dass** vor Auslauf des Pools ein Administrator einer die Zufallszahlen erzeugenden Komponente informiert wird, um die Generierung eines neuen Pools zu initiieren. Dies wäre vergleichbar mit einer Liste von iTANs, wie sie heute im Bankenumfeld verwendet werden.

19. Verfahren nach einem der Ansprüche 12 bis 18,
**dadurch gekennzeichnet,**
**dass** die Zufallszahl als zusätzliche Information in das Service-Zertifikat integriert ist.

20. Verfahren nach einem der vorhergehenden Ansprüche,
**dadurch gekennzeichnet,**
**dass** nach Herstellung der sicheren Initial-Verbindung automatisch ein Service-Zertifikat ausgehandelt wird.

21. Verfahren nach einem der vorhergehenden Ansprüche,
**dadurch gekennzeichnet,**
**dass** es sich bei dem Service-Zertifikat um ein Kurzzeit-Zertifikat handelt.

22. Verfahren nach einem der vorhergehenden Ansprüche,
**dadurch gekennzeichnet,**
**dass** die Erstellung des Einmal-Passworts und/oder ein Fernzugriff via die mittels Service-Zertifikat hergestellte sichere Verbindung überwacht und/oder protokolliert wird.

23. Ferndiagnostizierbare bzw. -wartbare Automatisierungs-Umgebung (01),
**dadurch gekennzeichnet**,
Mittel (02, 03, 04, 05, 06, 07) zur Durchführung eines Verfahrens nach einem der Ansprüche 1 bis 20.

24. Automatisierungs-Umgebung nach Anspruch 23,
**dadurch gekennzeichnet,**
**dass** die Mittel mindestens eine Netzwerk-Komponente (03) umfassen, welche mit einem Zufallszahlen-Generator ausgestattet ist, der zur Erstellung von Einmal-Passwörtern vorgesehen ist.

## Claims

1. Method for establishing a secure connection from a service technician (06, 07) to a component (02, 03) experiencing a failure in an automation environment which can be diagnosed and/or maintained remotely, wherein a service certificate is required for establishing the secure connection, **characterised in that**
a secure initial connection is first set up from the service technician (06, 07) to the automation environment (01) by means of a one-time password, via which initial connection a service certificate required for establishing the secure connection is then transmitted from the automation environment (01) to the service technician (06, 07), and the secure connection from the service technician (06, 07) to the component experiencing the failure (02, 03) is then established by means of the service certificate.

2. Method according to claim 1, **characterised in that** in the event of a failure occurring a service technician (07) responsible for a component experiencing a failure (02) receives via a first communication path and/or by means of a first message a trouble ticket which contains at least an indication pointing to the affected component (02) of the automation environment (01), and the one-time password is transmitted via a second communication path and/or by means of a second message.

3. Method according to claim 1 or 2, **characterised in that** the secure initial connection is a connection authenticated at least on the server side, via which connection the service technician authenticates himself by means of the one-time password.

4. Method according to claim 1, 2 or 3, **characterised in that** the one-time password is transmitted to the service technician responsible for the component experiencing the failure (02) by the Short Message Service (SMS).

5. Method according to claim 4, **characterised in that** the one-time password is generated automatically and transmitted by an SMS server (04) to the service technician (07) responsible for the component experiencing a failure (02).

6. Method according to one of the preceding claims, **characterised in that**
a user interface is used for generating the one-time password, which user interface permits an initial credential to be generated "by click" and then sent by SMS.

7. Method according to one of the preceding claims, **characterised in that**
in order to access a component experiencing a failure (02) in the automation environment (01) a service technician (07) connects to a network component (03) of the automation environment (01) by means of the initial connection, via which network component (03) he then receives the secure connection to the component (02) experiencing the failure.

8. Method according to claim 7, **characterised in that** at least the setting-up of the initial connection by means of the one-time password is monitored by a service technician (06) responsible for the network component (03).

9. Method according to claim 8, **characterised in that** the monitoring is carried out "remotely" by telemonitoring.

10. Method according to claim 7, 8 or 9,
**characterised in that**
the generation of a one-time password is initiated by the service technician (06) responsible for the network component (03) and then the service technician (06) responsible for the network component (03) initiates a transmission of the one-time password to the service technician (07) responsible for the component experiencing a failure (02).

11. Method according to one of the preceding claims,
**characterised in that**
the one-time password is an initial credential.

12. Method according to claim 11,
**characterised in that**
the initial credential is present in the form of a random number or is generated on the basis of a random number.

13. Method according to claim 12,
**characterised in that**
the initial credential consists only of a random number with no correlation to further data relating to the automation environment (01) and/or the component experiencing a failure (02).

14. Method according to claim 13,
**characterised in that**
the service technician receives this data or a part of this data by means of a trouble ticket.

15. Method according to one of claims 12, 13 or 14,
**characterised in that**
the current random number for access by the service technician (07) to the component experiencing the failure (02) is transported as additional information in status messages to the service technician (06) responsible for the network component (03).

16. Method according to one of claims 12 to 15,
**characterised in that**
the network component (03) has a pool of random numbers which are output for service technicians (06, 07).

17. Method according to claim 16,
**characterised in that**
after each completed access to specific components (02, 03) the pool is filled up again autonomously.

18. Method according to claim 16,
**characterised in that**
an administrator of a component generating the random numbers is notified before the pool runs out in order to initiate the generation of a new pool. This would be comparable with a list of iTANs, as used at the present time in the banking environment.

19. Method according to one of claims 12 to 18,
**characterised in that**
the random number is integrated as additional information into the service certificate.

20. Method according to one of the preceding claims,
**characterised in that**
after the secure initial connection is established a service certificate is negotiated automatically.

21. Method according to one of the preceding claims,
**characterised in that**
the service certificate is a short-term certificate.

22. Method according to one of the preceding claims,
**characterised in that**
the generation of the one-time password and/or a remote access via the secure connection established by means of service certificate is monitored and/or logged.

23. Automation environment (01) which can be diagnosed and/or maintained remotely,
**characterised by**
means (02, 03, 04, 05, 06, 07) for performing a method as claimed in one of claims 1 to 20.

24. Automation environment according to claim 23,
**characterised in that**
the means comprise at least one network component (03) which is equipped with a random number generator that is provided for the purpose of generating one-time passwords.

## Revendications

1. Procédé pour établir une liaison sécurisée allant d'un technicien de service (06, 07) vers un composant (02, 03) concerné par un incident dans un environnement d'automatisation pouvant être diagnostiqué à distance et/ou entretenu à distance, un certificat de service étant requis pour établir la liaison sécurisée, **caractérisé en ce qu'**est tout d'abord établie, au moyen d'un mot de passe à usage unique, une liaison initiale sécurisée allant du technicien de service (06, 07) vers l'environnement d'automatisation (01), via laquelle un certificat de service requis pour établir la liaison sécurisée est ensuite transmis de l'environnement d'automatisation (01) vers le technicien de service (06, 07), puis **en ce que** la liaison sécurisée allant du technicien de service (06, 07) vers le composant (02, 03) concerné par l'incident est établie au moyen du certificat de service.

2. Procédé selon la revendication 1, **caractérisé en ce qu'**un technicien de service (07) compétent pour un composant (02) concerné par un incident reçoit, à la survenance d'un incident, via une première voie de communication et/ou au moyen d'un premier message, un ticket d'incident qui contient au moins une indication relative au composant concerné (02) de l'environnement d'automatisation (01) et **en ce que** le mot de passe à usage unique est transmis via une deuxième voie de communication et/ou au moyen d'un deuxième message.

3. Procédé selon la revendication 1 ou 2, **caractérisé en ce que** la liaison initiale sécurisée est au moins une liaison authentifiée du côté du serveur, via laquelle le technicien de service s'authentifie au moyen du mot de passe à usage unique.

4. Procédé selon la revendication 1, 2 ou 3, **caractérisé en ce qu'**une transmission du mot de passe à usage unique vers le technicien de service du composant (02) concerné par l'incident se fait par Short Message Service (SMS).

5. Procédé selon la revendication 4, **caractérisé en ce que** le mot de passe à usage unique est créé automatiquement et est transmis par un serveur SMS (04) au technicien de service (07) compétent pour le composant (02) concerné par l'incident.

6. Procédé selon l'une des revendications précédentes, **caractérisé en ce qu'**est utilisée, pour créer le mot de passe à usage unique, une surface d'utilisateur qui permet, « par clic », de créer un permis initial puis de l'envoyer par SMS.

7. Procédé selon l'une des revendications précédentes, **caractérisé en ce qu'**un technicien de service (07), pour accéder à un composant (02) de l'environnement d'automatisation (01) qui est concerné par un incident, se connecte, au moyen de la liaison initiale, à un composant de réseau (03) de l'environnement d'automatisation (01), via lequel composant de réseau (03) il reçoit ensuite la liaison sécurisée vers le composant (02) concerné par l'incident.

8. Procédé selon la revendication 7, **caractérisé en ce qu'**au moins l'établissement de la liaison initiale au moyen du mot de passe à usage unique est surveillé par un technicien de service (06) compétent pour le composant de réseau (03).

9. Procédé selon la revendication 8, **caractérisé en ce que** la surveillance se fait par surveillance à distance, « remote ».

10. Procédé selon la revendication 7, 8 ou 9, **caractérisé en ce qu'**une création du mot de passe à usage unique est initialisée par le technicien de service (06) compétent pour le composant de réseau (03) et **en ce que** le technicien de service (06) compétent pour le composant de réseau (03) provoque ensuite une transmission du mot de passe à usage unique au technicien de service (07) compétent pour le composant (02) concerné par l'incident.

11. Procédé selon l'une des revendications précédentes, **caractérisé en ce que** le mot de passe à usage unique est un permis initial.

12. Procédé selon la revendication 11, **caractérisé en ce que** le permis initial se présente sous la forme d'un nombre aléatoire ou est créé à l'aide d'un nombre aléatoire.

13. Procédé selon la revendication 12, **caractérisé en ce que** le permis initial se compose uniquement d'un nombre aléatoire sans corrélation avec d'autres données concernant l'environnement d'automatisation (01) et/ou le composant (02) concerné par l'incident.

14. Procédé selon la revendication 13, **caractérisé en ce que** le technicien de service reçoit ces données resp. une partie de ces données avec un ticket d'incident.

15. Procédé selon l'une des revendications 12, 13 ou 14, **caractérisé en ce qu'**est également transporté vers le technicien de service (06) du composant de réseau (03), dans des messages de statut, le nombre aléatoire actuel pour l'accès du technicien de service (07) au composant (02) concerné par l'incident.

16. Procédé selon l'une des revendications 12 à 15, **caractérisé en ce que** le composant de réseau (03) dispose d'une réserve de nombres aléatoires qui sont émis pour des techniciens de service (06, 07).

17. Procédé selon la revendication 16, **caractérisé en ce que** la réserve est reconstituée automatiquement après chaque accès à certains composants (02, 03).

18. Procédé selon la revendication 16, **caractérisé en ce que**, avant l'épuisement de la réserve, un administrateur d'un composant qui génère les nombres aléatoires est informé pour initialiser la génération d'une nouvelle réserve. Ceci serait comparable à une liste d'iTAN tels qu'utilisés actuellement dans le secteur bancaire.

19. Procédé selon l'une des revendications 12 à 18, **caractérisé en ce que** le nombre aléatoire est intégré en tant qu'information supplémentaire au certificat de service.

20. Procédé selon l'une des revendications précédentes, **caractérisé en ce que**, après l'établissement de la liaison initiale sécurisée, un certificat de service est négocié automatiquement.

21. Procédé selon l'une des revendications précédentes, **caractérisé en ce que** le certificat de service est un certificat de courte durée.

22. Procédé selon l'une des revendications précédentes, **caractérisé en ce que** la création du mot de passe à usage unique et/ou un accès à distance sont surveillés et/ou consignés via la liaison sécurisée établie au moyen d'un certificat de service.

23. Environnement d'automatisation (01) pouvant être diagnostiqué ou entretenu à distance, **caractérisé par** des moyens (02, 03, 04, 05, 06, 07) permettant d'exécuter un procédé selon l'une des revendications 1 à 20.

24. Environnement d'automatisation selon la revendication 23, **caractérisé en ce que** les moyens comprennent au moins un composant de réseau (03) qui est équipé d'un générateur de nombres aléatoires qui est prévu pour créer des mots de passe à usage unique.
